# EUROPEAN PATENT SPECIFICATION

(11) **EP 2 580 041 B1**
(45) Date of publication and mention of the grant of the patent: **25.06.2014**
(21) Application number: 11724429.3
(22) Date of filing: 10.06.2011
(51) Int. Cl.: B29C 47/12

(54) **SHAPING UNIT FOR A DIE FOR EXTRUDING PLASTIC-BASED CELLULAR STRUCTURES**
FORMGEBUNGSEINHEIT FÜR EINEN DÜSENKOPF ZUM STRANGGIESSEN VON ZELLSTRUKTUREN AUF KUNSTSTOFFBASIS
UNITÉ DE MISE EN FORME POUR UNE FILIÈRE D'EXTRUSION DE STRUCTURES CELLULAIRES À BASE DE PLASTIQUE

(30) Priority: 14.06.2010 FR 1054687
(43) Date of publication of application: 17.04.2013
(73) Proprietor: SOLVAY SA, 1120 Bruxelles (BE)
(72) Inventor: GRANDJEAN, Dominique, B-1020 Brussels (BE)
(74) Representative: Regimbeau
(86) International application number: PCT/EP2011/059686
(87) International publication number: WO 2011/157649

(56) References cited:
- WO-A1-2007/020279
- FR-A1- 2 760 999

## Description

The present invention relates to a shaping unit for a die for extruding plastic-based cellular structures, more particularly cellular structures based on thermoplastic polymers. It also relates to an extrusion device for forming plastic-based cellular structures comprising this shaping unit. It further relates to a process for manufacturing plastic-based cellular structures carried out in the extrusion device comprising this shaping unit.

One requirement encountered in many (automotive, civil engineering, shipbuilding, etc.) industries consists in optimizing the mechanical properties/weight ratio of the structures used. Many processes have been developed for achieving this objective, and in particular for lightening plastic structures.

One process recently developed by the Applicant makes it possible to obtain plastic-based "honeycomb" cellular structures that are lightweight and have good-quality welds, this being so over a wide range of viscosities and temperatures. According to this process, these cellular structures are obtained by extruding lamellae based on molten plastic that are intermittently welded.

Such a process is described in the patent application published under the number WO 2007/020279 (document A).

The implementation of this process involves the use of an extrusion device comprising:
- a sheet die, preferably with an enlarged opening, which feeds the molten plastic to knives;
- a plurality of knives, positioned in parallel, vertical planes, which make it possible to form the lamellae of molten plastic that have to be welded; these knives define between them flow channels having, in the flow direction of the molten plastic, a convergent first part and thereafter, a substantially straight part that forms the side walls of each constituent slot of the die;
- two shaping units ("sizing units"), the length of which is suitable for the plastic to always be in the molten or pasty state (depending on whether it is a semicrystalline or amorphous plastic, respectively) and which generally take the form of metal blocks that are placed on the front face of the die and on either side of the die slots, one above them and the other below them. Two chambers are cut out in each of these shaping units, from which chambers there start tubular ducts that terminate in orifices of preferably circular cross section, emerging near the spaces lying between the slots of the die and therefore, during implementation of the process according to the invention, near the spaces lying between the extruded lamellae. Each chamber of each of these shaping units is connected alternately to a vacuum pump and to a compressed gas circuit. Thus, the spaces between two adjacent extruded lamellae are subjected, in successive alternations, to an injection of compressed gas and to a vacuum, the two sides of any one lamella being, in respect of one of them, subjected to the action of the compressed gas and, in respect of the other of them, subjected to the action of the vacuum, and vice versa during the next alternation, so as to deform the lamellae and weld them together in pairs, with formation, in a plane approximately parallel to the extrusion direction, of a cellular structure whose constituent cells extend perpendicular to the extrusion direction.

In order to transpose this extrusion device to a larger prototype line, it has been found advantageous to use tiered, three-compartment shaping units.

Each upper compartment of each shaping unit comprises 2 pairs of divergent ducts emerging on the lower face of the compartment, on either side of its longitudinal axis, connected alternately to a vacuum pump or to a compressed gas circuit, in order, alternately and in successive alternations, to distribute compressed gas and produce a vacuum.

Each middle compartment of each shaping unit comprises at least four series of pipes divided into two symmetrical pairs, each series being connected to the divergent duct of the upper compartment which corresponds thereto. The longitudinal axes of the pipes of each series gradually deviate from the vertical in order, in successive alternations, to more widely redistribute the compressed gas and to provide the vacuum, respectively to and from the lower compartment, over substantially its entire length.

Each lower compartment of each shaping unit (i.e. the compartment closest to the spaces lying between the slots of the die) comprises two rows of tubular channels that pass through it from its upper face and that are positioned on either side of its longitudinal axis, each row of tubular channels communicating with the series of pipes of the middle compartment which correspond thereto, the lower orifices of said channels being arranged so as to be aligned along the length of the compartment and to emerge near the spaces lying between the parallel slots of the die and therefore near the spaces lying between the extruded lamellae.

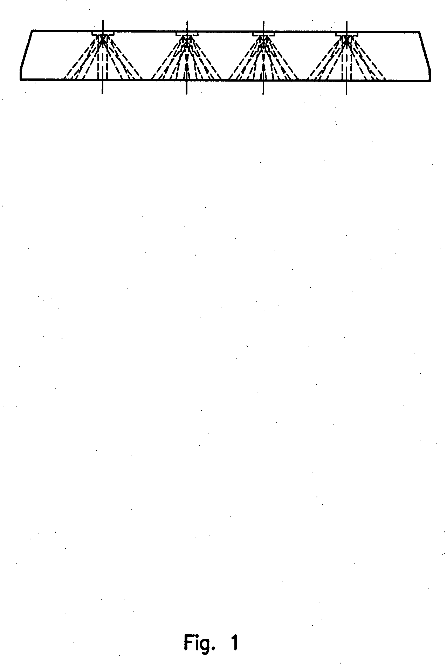

These shaping units have a drawback linked to the geometry of their middle compartment. Indeed, as has been stated, this middle compartment comprises series of pipes divided into two pairs, the series of each pair being positioned on either side of the longitudinal axis of the upper face of the middle compartment and the longitudinal axes of the pipes gradually deviating from the vertical in order, every other alternation, to more widely redistribute the compressed gas over the entire length of the lower compartment. The diagram that is the subject of the appended Figure 1 is a cross section of a middle compartment showing a typical arrangement of one of the series of pipes of one of the pairs, here four in number, the upper compartment comprising in this case four ducts which correspond thereto and which emerge on the upper face of the middle compartment.

This design of the middle compartment does not make it possible to distribute the compressed gas in the rows of tubular channels of the lower compartment in a balanced and homogeneous manner for at least two reasons:
- the pipes of the middle compartment have, relative to their point of origin on the upper face of this compartment, different angles and therefore different lengths, which influences the path of the compressed gas;
- given that the lower orifices of the channels of the lower compartment must be evenly spaced and that the number thereof depends on the number of lamellae extruded and therefore on the width of the die, the number of pipes of the middle compartment is not necessarily the same for each series (see above, the diagram of the section of the middle compartment where the series, from right to left, respectively numbers 5 pipes; 6 pipes; 6 pipes and 5 pipes).

This imbalance results in a variable pressure at the outlet of the lower orifices of the channels of the lower compartment with, as a consequence, the formation of a cellular structure whose constituent cells have different dimensions.

The present invention aims to solve this problem by providing a shaping unit that enables the production of cellular structures whose constituent cells have uniform dimensions, regardless of the length of the shaping unit.

For this purpose, the invention relates to a shaping unit comprising three compartments, referred to as "upper", "middle" and "lower" and that are tiered, for manufacturing a plastic-based cellular structure in a die with parallel slots, in which:
- the upper compartment is passed through transversely by at least two pairs of divergent ducts, emerging on the lower face of said compartment and located on either side of the longitudinal axis of said compartment, at least one first pair of divergent ducts, located on one side of said longitudinal axis, and at least one second pair of divergent ducts, located on the other side of said longitudinal axis, each of said pairs of divergent ducts communicating, in successive alternations and sequentially, with means for injecting a compressed gas and with means for creating a vacuum;
- the middle compartment comprises means that communicate with at least the first pair and with at least the second pair of divergent ducts of the upper compartment in order to redistribute the compressed gas and maintain the vacuum respectively to and from the lower compartment;
- the lower compartment comprises, on its upper face, two rows of tubular channels, having evenly spaced upper orifices, said channels transversely passing through said compartment and said rows being positioned on either side of the longitudinal axis of said compartment, each row of tubular channels communicating with the means, the lower orifices of the channels of each row being arranged so as to be aligned along the length of the lower face of the lower compartment and to emerge near the spaces lying between the parallel slots of the die;
the means of the middle compartment consisting of two continuous and elongated cavities positioned on either side of the longitudinal axis of said compartment, extending over substantially its entire length and passing through it transversely.

In the present description, the term "shaping unit" should be understood in its conventional meaning, which is "apparatus designed to give its definitive shape to a plastic" ["appareil destine à donner sa forme definitive à une matière plastique"] (see "Le Petit Robert 1 ", Le Robert edition©1967, rev. 1983, page 364). More particularly, in the sense of the present invention, the term "shaping unit" is understood to mean any equipment:
- positioned on the front face of a die with parallel slots that makes it possible to extrude lamellae of molten plastic and, more specifically, any equipment positioned in pairs on either side of these slots, one above them and the other below them, and
- the role of which is to convert these lamellae of molten plastic into a cellular structure whose constituent cells extend perpendicular to the extrusion direction.

In the present description, the terms "in successive alternations and sequentially" define the way in which, on the one hand, the compressed gas is injected and redistributed and, on the other hand, the vacuum is created and maintained in the pairs of divergent ducts of the upper compartment, in the elongated cavities of the middle compartment and in the lower orifices of the lower compartment of the shaping unit. It is following these successive alternations that, during a sequence for manufacture of the plastic-based cellular structure, the lower (even) orifices of the channels of the first row of the lower compartment of the shaping unit are subjected to the action of the compressed gas and the lower (odd) orifices of the channels of the second row of the lower compartment of the shaping unit are subjected to the vacuum. It is following these successive alternations that, during the sequence following the manufacture of the cellular structure, the lower (odd) orifices of the channels of the second row of the lower compartment of the shaping unit are subjected to the action of the compressed gas and the lower (even) orifices of the channels of the first row of the lower compartment of the shaping unit are subjected to the vacuum, and so on, following a repetition of the same sequences.

In the present description, the terms "upper" and "lower" denote the compartments of the shaping unit and the faces of these compartments respectively furthest and nearest the die with parallel slots.

In the present description, the terms "length" and "width" respectively denote the dimensions of the various compartments of the shaping unit measured perpendicular (length) and parallel (width) to the direction of the flow of the plastic through the die with parallel slots.

In the present description, the term "plastic" is understood to define any thermoplastic polymer, including thermoplastic elastomers, and also blends thereof. The term "polymer" is understood to mean both homopolymers and copolymers (especially binary or ternary copolymers). Examples of such copolymers are, non-limitingly, random copolymers, linear block copolymers, non-linear block copolymers, and graft copolymers.

Any type of thermoplastic polymer or copolymer, the melting point of which is below the decomposition temperature, is suitable. Synthetic thermoplastics having a melting range spread over at least 10° C are particularly suitable. Examples of such materials include those that exhibit polydispersity of their molecular weight.

In particular, it is possible to use polyolefins, polyvinyl halides (PVC for example) or polyvinylidene halides (PVDF for example), thermoplastic polyesters, polyphenylsulphones (PPSUs), polyketones, polyamides (PAs) and copolymers thereof. Polyolefins [and in particular polypropylene (PP) and polyethylene (PE)], PPSUs, PAs, PVC and PVDF have given good results.

Other definitions and details regarding plastics which can be formed in extrusion devices, including a die with slots that are parallel and that are equipped with shaping units according to the invention, may be found in document A.

The shaping unit according to the invention advantageously takes the form of an assembly of metal blocks which constitute the compartments thereof and is positioned on the front face of the die comprising the slots.

In practice, two shaping units are positioned symmetrically on either side of the die slots, one above them and the other below them. They can advantageously be moved vertically, in opposite directions, in order to define the height of the lamellae extruded through the parallel slots of the die and consequently the height of the final cellular structure. The shaping units are not generally cooled but their temperature may be set at a predetermined value, for example by circulation of oil. Furthermore, the way in which the two shaping units are positioned ensures, at most, a partial sealing with the upper and lower surfaces of the final cellular structure. The expression "partial sealing" is understood to mean a gap such that the pressurized gas used to form a constituent cell can partially escape between the cellular structure produced and the two longitudinal walls of the lower compartment of the shaping unit.

The width of the shaping units according to the invention is suitable for the plastic to always be in the molten or pasty state (depending on whether it is a semicrystalline or amorphous plastic, respectively). Preferably, the ratio of the width of the shaping unit to the height of the flow channel (i.e. the height of the slots of the die, which corresponds to the height of the cells forming the cellular structure) is preferably at most equal to 3, preferably 2, or even 1; for practical reasons, this ratio is not generally below 0.5).

The upper compartment of each shaping unit according to the invention is passed through transversely by at least two pairs of divergent ducts, emerging on the lower face of said compartment. In the present description, the expression "(pair(s) of) divergent ducts" is understood to define two ducts advantageously of cylindrical shape, the upper orifices of which are common (juxtapose) and which deviate longitudinally from one another forming, in their common vertical plane, an angle advantageously between 10 and 120°, preferably between 30 and 90°.

Advantageously, the upper compartment of each shaping unit is passed through, from its upper face, by an even number, generally between 2 and 6, of pairs of divergent ducts. Preferably, this compartment is passed through by 4 pairs of divergent ducts. These pairs are advantageously located in halves on either side of the longitudinal axis of said compartment. When there are more than 2, these pairs are preferably evenly spaced along the dimension of the compartment perpendicular to the direction of the flow of the plastic.

Advantageously, the two divergent ducts of each pair passing transversely through the upper compartment of the shaping unit join together on its upper face to emerge in a common chamber. Each chamber communicates, in successive alternations and sequentieally, either with known means for injecting a compressed gas, or with known means for creating a vacuum. These means are, respectively and preferably, a compressed gas circuit and a vacuum pump. The compressed gas that can be used may be air, an inert gas or a mixture of inert gases not liable to impair the thermal stability of the composition. It is preferably air. This gas may be heated. In this case, the temperature of the gas is preferably at most 100°C below the processing temperature (T_{proc}) of the plastic, preferably at most 50°C below T_{proc} or even at most 20°C below T_{proc}. In all cases, this temperature is below T_{proc}.

The middle compartment of each shaping unit according to the invention comprises means connected to the pairs of ducts of the upper compartment. This connection must allow the compressed gas to be redistributed and the vacuum to be maintained respectively to and from the lower compartment. According to the invention, these means consist of two continuous and elongated cavities positioned on either side of the longitudinal axis of the middle compartment, extending over substantially its entire length and passing through it transversely from its upper face. In the present description, the terms "substantially its entire length" mean that the two continuous cavities passing transversely through the middle compartment of the shaping unit extend over at least 70% of the length of this compartment. Advantageously, these two continuous cavities extend over at least 75% of the length of the upper face of the middle compartment and over at least 85% of the length of its lower face. Preferably, the geometry of these two cavities is such that they extend over at least 80% of the length of the upper face of the middle compartment and over at least 90% of the length of its lower face.

The lower compartment of each shaping unit according to the invention comprises, on its upper face, two rows of tubular channels having evenly spaced upper orifices. These two rows are positioned on either side of the longitudinal axis of the lower compartment. The upper orifices of these tubular channels may advantageously be covered with a filter, the role of which is to create a pressure drop for the passage of the compressed gas so that this gas is propelled into the tubular channels of the lower compartment with a uniform pressure. This filter may be constituted of sintered glass, sintered stainless steel, sintered bronze or an open-cell polymer material.

Each row of tubular channels of the lower compartment of the shaping unit may advantageously be hollowed out in continuous and elongated housings having substantially the same length and the same width as the continuous and elongated cavity of the middle compartment with which it communicates. The term "substantially" means, in the present description, that the lengths and widths of the continuous and elongated housings and, respectively, of the continuous and elongated cavities do not differ by more than 15%, preferably do not differ by more than 5%. In this case, the filter is advantageously inserted in each continuous housing in the form of a small strip having the dimensions of this housing.

The tubular channels pass through the lower compartment transversely from its upper face. The upper orifices of the tubular channels of each of the two rows of the lower compartment are located in the extension of each of the corresponding two continuous and elongated cavities of the middle compartment with which these two rows communicate. The lower orifices of each tubular channel of a row are arranged so as to be aligned alternately with the lower orifices of each corresponding tubular channel of the other row. These lower orifices, thus aligned over a length of the lower face of the lower compartment, emerge near the spaces lying between the parallel slots of the front face of the die and therefore, during the manufacture of a cellular structure, near the spaces lying between the plastic-based extruded lamellae.

The expression "the lower orifices... emerge near the spaces lying between the parallel slots" is understood, in the present description, to mean that the lower orifices of the tubular channels are at a distance from the planes determined by the upper and lower ends of the extruded lamellae of at least 1/20, preferably of at least 1/10, particularly preferably of at least 1/5 of the length of these lamellae. In practice, alternatively expressed in millimetres, this distance is advantageously not less than around 0.5 mm, preferably not less than around 1 mm. This distance advantageously does not exceed around 4 mm, preferably does not exceed around 3 mm.

The number of lower orifices of the tubular channels of the two rows of the lower compartment of each shaping unit, which is the sum of the upper orifices of each of these two rows, may vary to a large extent and is especially dependent on the width of the cellular structure that it is desired to manufacture and on the number of cells per unit of surface area. This number of orifices may advantageously vary between 40 and 500, preferably between 50 and 400, more particularly between 60 and 200.

During the manufacture of a plastic-based cellular structure, each lower orifice of the lower compartment of each shaping unit is thus, in successive alternations and sequentially, the site of a vacuum and of an injection of compressed gas via its connection with the divergent ducts of the upper compartment and the elongated cavities of the middle compartment. Thus, the spaces between two adjacent extruded lamellae are subjected, in successive alternations, to an injection of compressed gas and to a vacuum, the two sides of any one lamella being, for one side, subjected to the action of the compressed gas and, for the other side, to the action of the vacuum, and inversely during the following alternation, in order to produce deformation of the lamellae and weld them in pairs with formation, in a plane approximately parallel to the extrusion direction, of a cellular structure, the constituent cells of which extend perpendicular to the extrusion direction.

On leaving the shaping units, the cellular structure is preferably cooled by any known means, generally using a cooling fluid. Thus, the structure may be simply cooled by the ambient air, by blowing a jet of cold air, by spraying a mist of water, etc. A jet of cold air gives good results. This operation allows the cellular structure to be stiffened, without solidifying it, by a slight reduction in the temperature.

Once the structure has been formed, it may prove to be beneficial, before or after the structure has solidified, to make the thickness thereof uniform (i.e. to make the height of the cells constant) using any suitable device such as, for example, rolls.

The shape of the cells of this structure may be approximately circular, elliptical (when the extrusion and/or haul-off speeds are higher), polygonal (when the applied pressure differences are more sudden), etc.

These cells generally have a length L (in the extrusion direction) that is greater than their width I (in the extrusion plane but in a direction perpendicular to the extrusion direction). In general, the aspect ratio (L/l) of the cells is therefore greater than 1, or even greater than 1.5, but generally less than 2.

The length L of the cells is generally at least 4 mm, or even at least 10 mm, but generally it does not exceed 30 mm, or even 20 mm. The width 1 itself is generally at least 2 mm, or even at least 5 mm, but it generally does not exceed 15 mm, or even 10 mm.

As regards the wall thickness of the cells, this is determined by the thickness of the slots through which the molten plastic lamellae are extruded and by the draw ratio imposed on the molten lamellae. In practice, the thickness is generally at least 100 µm, or even at least 200 µm or at least 250 µm. However, advantageously it does not exceed 1 mm, or even 0.8 mm and preferably does not exceed 0.6 mm for fear of making the structure too heavy. The lower limit depends in fact on the embodiment of the die. If this is a one-piece die in which the slots have been machined (for example by electrical discharge machining or by means of a laser beam), it will in general be necessary for the slots to be wider than if said die were to consist of an assembly of lamellae.

The size of the cellular structures obtained by the process according to the invention is limited by the size of the processing equipment. The term "size" is understood in fact to mean only the width and the height (measured perpendicular to the extrusion plane) and not the length, since the latter is determined by the duration of the extrusion and the frequency with which the extruded sheet is cut. The height of these structures is generally at least 1 mm, or even 2 mm, and preferably 5 mm; it generally does not exceed 70 mm, or even 60 mm.

It is also possible to obtain anisometric cellular structures, the properties of which are more isotropic, which are less dense than the cellular structures, by subjecting the cellular structures recovered at the outlet of the shaping units to a step during which they are drawn transversely, that is to say perpendicular to the extrusion direction, preferably after prior thermal conditioning. Details relating to this drawing step and to the devices enabling the implementation thereof are contained in the patent applications published under the numbers WO 2007/110370 and WO 2009/101063, the contents of which are incorporated by reference in the present description for everything that they disclose.

The cellular structure obtained may then be taken up by a take-off unit. The haul-off speed and the extrusion rate will be optimized, in particular according to the size and the thickness of the cells, and also the desired shape.

On leaving the take-off unit, the final cellular structure may, depending on the shape of the cells, easily be wound onto a reel. Alternatively, it may be subjected to a surface treatment (for example a corona treatment), so as in particular to improve the adhesion properties thereof, and to be lined with a nonwoven or with top and bottom facings. After these optional operations, the final panel is cut, both lengthwise and transversely, into sheets of the desired dimensions and stored.

The production scrap may be taken up either before the finishing operations, or afterwards, and recycled back into production.

According to another aspect, the invention also relates to an extrusion device for forming plastic-based cellular structures.

This extrusion device comprises:
- a sheet die, preferably with an enlarged opening, which feeds the molten plastic to slots made in the front face of the die via metal knives that define flow channels extended by metal lips having a straight portion;
- two shaping units each comprising three compartments, referred to as "upper", "middle" and "lower" and that are tiered, as described above,
and positioned symmetrically on either side of the slots of the front face of the die.

According to yet another aspect, the invention also relates to a process for manufacturing plastic-based cellular structures carried out in the extrusion device as defined above. According to one particular variant of this process, anisometric cellular structures are manufactured, by subjecting the cellular structures recovered at the outlet of the shaping units to a step during which they are drawn transversely, after prior thermal conditioning. Details relating to this drawing step, to this prior thermal conditioning and to the devices enabling the implementation thereof are contained in the patent applications published under the numbers WO 2007/110370 and WO 2009/101063

The cellular structures obtained in the extrusion devices comprising the shaping units according to the invention are advantageously used in the building industry (floors, lightweight ceilings, partitions, doors, concrete boxes, etc.), in furniture, in packaging (side protection, wrapping of objects, etc.), in motor vehicles (parcel shelf, door linings, etc.), etc. These structures are particularly suitable for furniture and for buildings, for example for the construction of permanent shelters (habitations) or temporary shelters (rigid tents or humanitarian shelters, for example). They are also suitable as constituents of sports hall floors.

They may be used therein as such, or as sandwich panels, in which they are placed between two sheets called facings. The latter variant is advantageous, and in this case it is possible to manufacture said sandwich panel by welding, bonding, etc., or any other method of assembling the facings and the core (used cold or hot, just after extrusion) that is suitable for plastics. One advantageous way of manufacturing said sandwich panel consists in welding the facings to the cellular core. Any welding process may be suitable for this purpose, processes using electromagnetic radiation giving good results in the case of structures/facings that are at least partially transparent to the electromagnetic radiation. Such a process is described in patent application FR 03/08843 (FR 2 857 616).

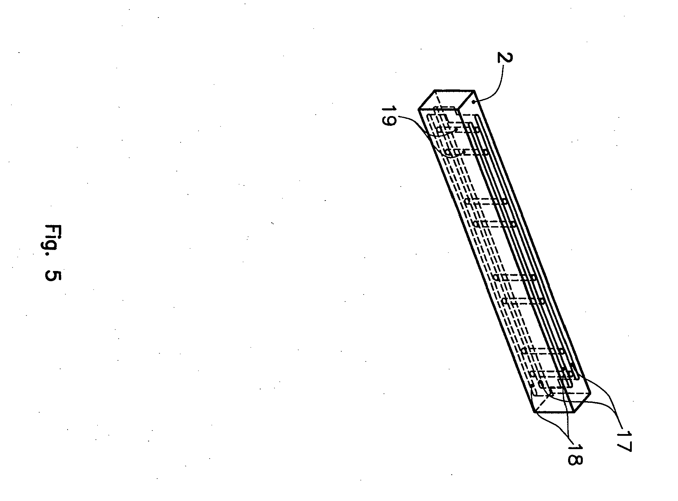

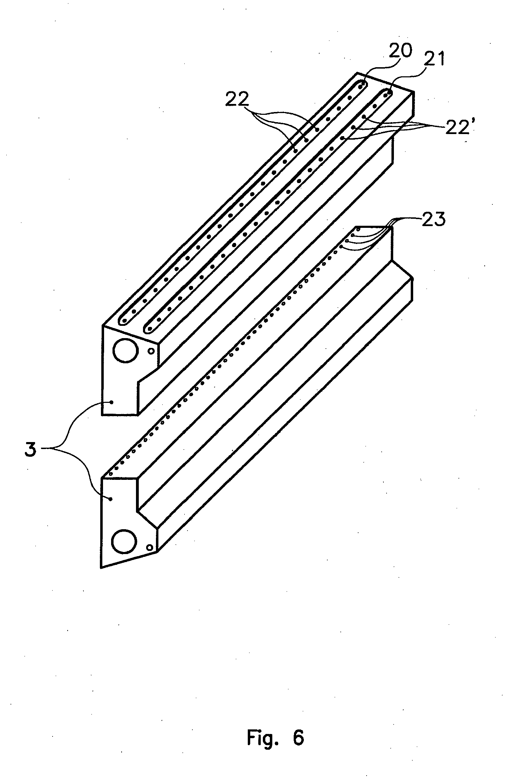

One particular embodiment of shaping units according to the invention will now be illustrated with reference to the drawings accompanying the present description. These drawings consist of appended Figures 2 to 6, schematically representing a typical embodiment of these shaping units.
Figure 2 is a cross section, in a vertical mid-plane, of the overall extrusion device equipped with two shaping units according to the invention.
Figure 3 is a partial view of the front face of the lower half of the die, of the parallel slots with which it is equipped, of the knives that between them define the flow channels, the straight part of which forms the side walls of each constituent slot of the die, and of the lower shaping unit.
Figure 4 is a view of the upper compartment of the shaping unit with the pipes connected, in successive alternations and sequentially, sometimes to a compressed air circuit and sometimes to a vacuum pump.
Figure 5 is a view of the middle compartment of the shaping unit with its two continuous and elongated cavities, positioned on either side of the longitudinal axis of this compartment.
Figure 6 represents the lower compartment of the shaping unit (view of its upper and lower faces).

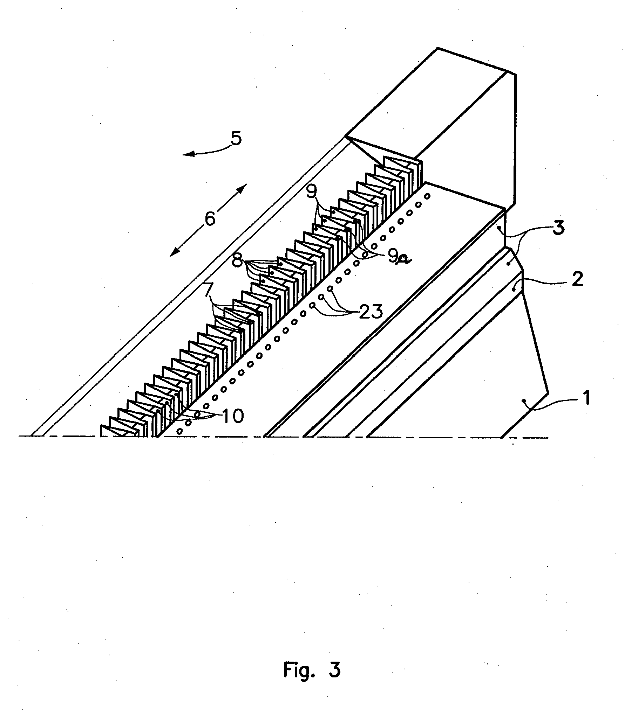

In the particular embodiment of the extrusion device equipped with shaping units shown in the figures, the plastic-based composition intended to be extruded, in order to form the cellular structure, feeds the sheet die, via the feed 4 and the feed channel 5, with molten composition towards the enlarged opening 6. The molten composition passes through the slots 7 made on the front face of the die via the metal knives 8 defining the flow channels 9, which are extended by metal lips (see Figure 3) which have a straight part 9a and are intended to be embedded in the insulating coating 10, this coating preventing the cooling of the straight parts 9a of the flow channels 9 and thereby a stiffening of the molten plastic which would accompany a premature solidification of this molten plastic as it exits the slots 7 of the die.

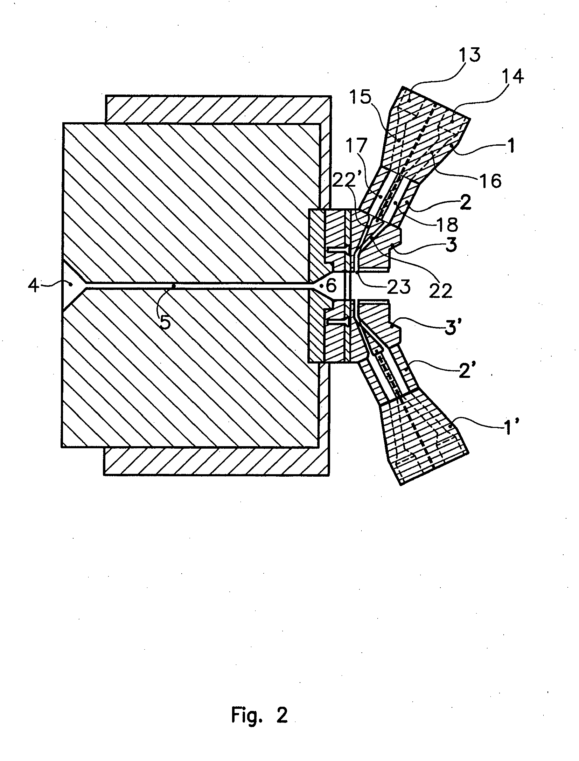

Two shaping units, positioned symmetrically on either side of the slots 7 of the front face of the die (see Figure 2), each comprise an upper compartment (1,1'), a middle compartment (2,2') and a lower compartment (3,3').

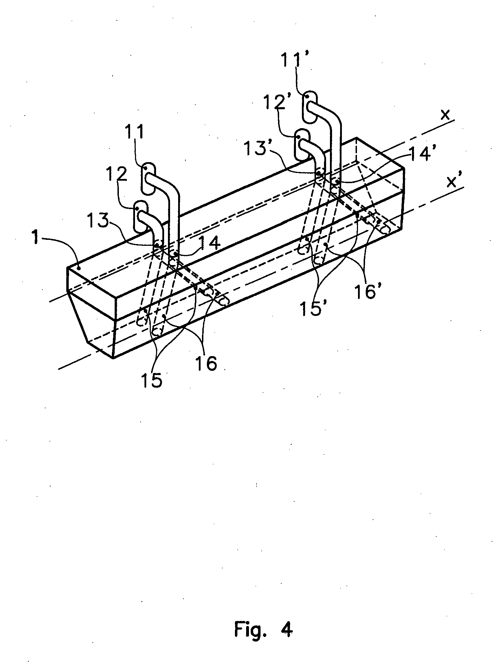

The upper compartment 1 of each shaping unit is passed through, transversely and on either side of the longitudinal axes x and x' of its upper and lower faces (see Figure 4), by two lots of two pairs of divergent ducts (15, 15' and 16, 16') that emerge on the lower face of said compartment. The two divergent ducts of each pair of the upper compartment 1 join together on its upper face to emerge together in four chambers (respectively 13, 13' and 14, 14') distributed in pairs on either side of the longitudinal axis x of the upper compartment 1. The pair of chambers 13 - 13' communicates, in successive alternations and sequentially, with a compressed air circuit or with a vacuum pump via the pipes 12 and 12'; the pair of chambers 14 - 14' communicates, in successive alternations and sequentially, with a vacuum pump or with a compressed air circuit via the pipes 11 and 11'.

To achieve this, between the pipes (11, 11', 12, 12') and the compressed air circuit and the vacuum pump, there is a device (not shown) comprising tubes that connect the pipes (11, 11', 12, 12') both to the compressed air circuit and to the vacuum pump, solenoid valves and also a timer (a clock) to control the duration and the alternation of the sequences. This timer acts on the solenoid valves to alternately and in a sequenced manner, connect the pipes (11, 11', 12, 12') to the compressed air circuit and to the vacuum pump, it being understood that when the pipes (11, 11') are connected to the compressed air circuit, the pipes (12, 12') are connected to the vacuum pump, and vice versa.

The middle compartment 2 of each shaping unit according to the invention comprises two continuous and elongated cavities 17 and 18 that pass through it transversely from its upper face and that are positioned on either side of its longitudinal axis and are connected to the corresponding pairs of ducts (15, 15' and respectively 16 and 16') of the upper compartment. This connection allows, in successive alternations and sequentially within one and the same cavity, the compressed gas to be redistributed and the vacuum to be maintained respectively to and from the lower compartment 3. The cylindrical holes 19 being used to firmly attach the middle compartment 2, respectively to the upper compartment 1 and lower compartment 3 via the introduction of means such as screws, bolts, etc. (not shown).

The lower compartment 3 of each shaping unit according to the invention comprises, on its upper face, two rows 20 and 21 of tubular channels having evenly spaced upper orifices (22, 22'). These two rows are positioned on either side of the longitudinal axis of the lower compartment 3. Each row of tubular channels of the lower compartment 3 is hollowed out in continuous and elongated housings having substantially the same length and the same width as the corresponding continuous and elongated cavity of the middle compartment 2 with which it communicates. A bronze or polyamide (commonly named "nylon") filter in the form of a small strip (not shown) is inserted in each continuous housing.

The tubular channels of the rows 20 and 21 pass through the lower compartment 3 transversely from its upper face. Each row 20 and 21 of tubular channels of the lower compartment is located in the extension of the continuous and elongated cavity (17 and respectively 18) of the middle compartment 2 which corresponds thereto and with which it communicates. The lower orifices of each tubular channel of the row 20 are arranged so as to be aligned alternately with the lower orifices of each corresponding tubular channel of the other row 21 which faces it. The lower orifices 23 thus formed are near the spaces lying between the parallel slots 7 of the die and therefore, during the manufacture of a cellular structure, near the spaces lying between the plastic-based extruded lamellae. During the manufacture of a plastic-based cellular structure, each lower orifice of the lower compartment of each shaping unit is thus, in successive alternations and sequentially, the site of a vacuum and of an injection of compressed air via its connection with the divergent ducts 15, 15' and 16, 16' of the upper compartment and the elongated cavities 17 and 18 of the middle compartment 2.

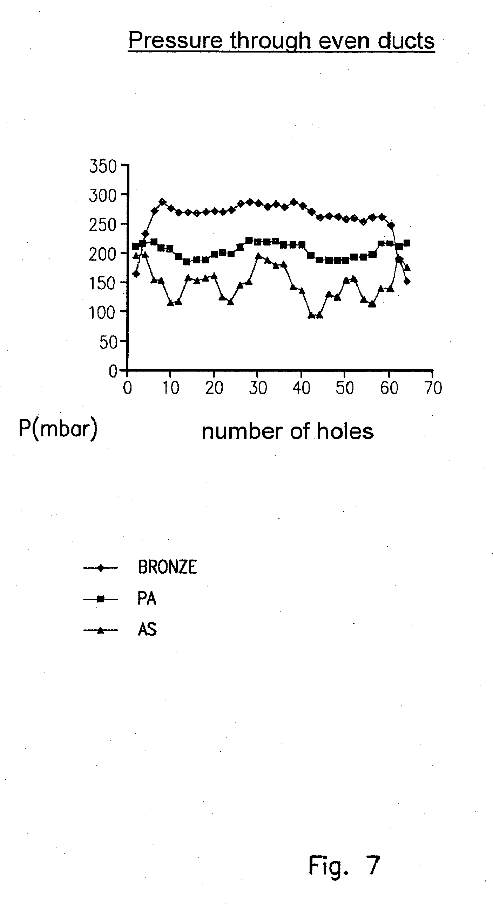

Plotted in the chart of Figure 7 appended to the present description, are measurements of the air pressure at the outlet of the even orifices of the lower compartment 3 when the middle compartment comprises (by way of comparison : this is the the old solution AS) series of pipes that gradually deviate from the vertical and are divided into four pairs (see above) **(-▲-**pressure lines) and when the middle compartment comprises two continuous and elongated cavities according to the invention (in this case, a polyamide filter PA (-■- pressure lines) and bronze filters (-◆- pressure lines) are respectively inserted in each continuous housing of the lower compartment).

This chart clearly highlights the improvement provided by the shaping units according to the invention, the air exiting the lower orifices of the lower compartment in a stable manner.

## Claims

1. Shaping unit comprising three compartments, referred to as "upper", "middle" and "lower" and that are tiered, for manufacturing a plastic-based cellular structure in a die with parallel slots, in which:
- the upper compartment (1) is passed through transversely by at least two pairs of divergent ducts (15, 16), emerging on the lower face of said compartment and located on either side of the longitudinal axis of said compartment, at least one first pair of divergent ducts (15), located on one side of said longitudinal axis, and at least one second pair of divergent ducts (16), located on the other side of said longitudinal axis, each of said pairs of divergent ducts (15, 16) communicating, in successive alternations and sequentially, with means for injecting a compressed gas and with means for creating a vacuum;
- the middle compartment (2) comprises means that communicate with at least the first pair (15) and with at least the second pair (16) of divergent ducts of the upper compartment in order to redistribute the compressed gas and maintain the vacuum respectively to and from the lower compartment (3);
- the lower compartment (3) comprises, on its upper face, two rows (20, 21) of tubular channels, having evenly spaced upper orifices (22, 22'), said channels transversely passing through said compartment and said rows being positioned on either side of the longitudinal axis of said compartment, each row of tubular channels communicating with the means, the lower orifices (23) of the channels of each row being arranged so as to join together and be aligned along the length of the lower face of the lower compartment and to emerge near the spaces lying between the parallel slots of the die;
the means of the middle compartment consisting of two continuous and elongated cavities (17, 18) positioned on either side of the longitudinal axis of said compartment, extending over substantially its entire length and passing through it transversely.

2. Shaping unit according to Claim 1, **characterized in that** the upper compartment (1) is passed through transversely by four pairs of divergent ducts (15, 15'and 16, 16').

3. Shaping unit according to Claim 1 or 2, **characterized in that** the divergent ducts of at least the first pair (15) and the divergent ducts of at least the second pair (16) join together on the upper face of the upper compartment (1) in order to emerge respectively in at least one common chamber (13) and in at least one common chamber (14), each of these common chambers (13, 14) communicating, in successive alternations and sequentially, with a compressed gas circuit and with a vacuum pump.

4. Shaping unit according to any one of the preceding claims, **characterized in that** each row (20, 21) of tubular channels of the lower compartment (3) is hollowed out in continuous and elongated housings having substantially the same length and the same width as the continuous and elongated cavity (17, 18) of the middle compartment (2) with which it communicates.

5. Shaping unit according to any one of the preceding claims, **characterized in that** the upper orifices (22, 22') of the tubular channels (20, 21) of the lower compartment (3) are covered by a filter.

6. Extrusion device for forming plastic-based cellular structures comprising:
- a sheet die, preferably with an enlarged opening (6), which feeds the molten plastic to slots (7) made in the front face of the die via metal knives (8) that define flow channels (9) extended by metal lips having a straight portion (9a);
- two shaping units according to any one of Claims 1 to 5 positioned symmetrically on either side of the slots (7) of the front face of the die.

7. Process for manufacturing plastic-based cellular structures using the extrusion device according to Claim 6.

8. Process according to Claim 7, **characterized in that** the manufactured cellular structures are anisometric.

9. Process according to Claim 8, **characterized in that** the cellular structures recovered at the outlet of the shaping units are subjected to a step during which they are drawn transversely, after prior thermal conditioning.

## Patentansprüche

1. Formgebungseinheit mit drei übereinander und/oder gestuft angeordneten Kammern, nämlich einer "oberen", "mittleren" und "unteren" Kammer, zur Herstellung einer Zellstruktur auf Kunststoffbasis in einem Düsenkopf mit parallelen Schlitzen, wobei:
- die obere Kammer (1) transversal durchquert wird von mindestens zwei Paaren divergenter Leitungen (15, 16), die an der unteren Seite der Kammer austreten und beiderseits der Längsachse der Kammer angeordnet sind, mindestens ein erstes Paar divergenter Leitungen (15), das an der einen Seite der Längsachse angeordnet ist, und mindestens ein zweites Paar divergenter Leitungen (16), das an der anderen Seite der Längsachse angeordnet ist, wobei jedes der Paare divergenter Leitungen (15, 16) in abwechselnder Folge und nacheinander mit Einrichtungen zum Injizieren eines Druckgases und mit Einrichtungen zum Erzeugen eines Unterdrucks in Verbindung steht;
- die mittlere Kammer (2) Einrichtungen aufweist, die mit mindestens dem ersten Paar (15) und mit mindestens dem zweiten Paar (16) divergenter Leitungen der oberen Kammer in Verbindung stehen, um zu und aus der unteren Kammer (3) das Druckgas zu verteilen bzw. den Unterdruck zu halten;
- die untere Kammer (3) an ihrer oberen Seite zwei Reihen (20, 21) rohrförmiger Kanäle mit gleichmäßig beabstandeten oberen Öffnungen (22, 22') aufweist, wobei sich die Kanäle transversal durch die Kammer erstrecken und die Reihen beiderseits der Längsachse der Kammer angeordnet sind, wobei jede Reihe rohrförmiger Kanäle mit den Einrichtungen in Verbindung steht, die unteren Öffnungen (23) der Kanäle jeder Reihe derart angeordnet sind, dass sie miteinander vereinigt sind und entlang der Länge der unteren Seite der unteren Kammer ausgerichtet sind und in der Nähe der Zwischenräume zwischen den parallelen Schlitzen des Düsenkopfs austreten;
die Einrichtungen der mittleren Kammer aus zwei kontinuierlichen und länglichen Hohlräumen (17, 18) bestehen, die beiderseits der Längsachse der Kammer angeordnet sind, sich im Wesentlichen über deren gesamte Länge erstreckend und sie transversal durchquerend.

2. Formgebungseinheit nach Anspruch 1, **dadurch gekennzeichnet, dass** die obere Kammer (1) transversal von vier Paaren divergenter Leitungen (15, 15' und 16, 16') durchquert wird.

3. Formgebungseinheit nach Anspruch 1 oder 2, **dadurch gekennzeichnet, dass** an der oberen Seite der oberen Kammer (1) die divergenten Leitungen mindestens des ersten Paars (15) und die divergenten Leitungen mindestens des zweiten Paars (16) vereinigt sind, um jeweils in mindestens einen gemeinsamen Raum (13) bzw. in mindestens einen gemeinsamen Raum (14) zu münden, wobei jeder dieser gemeinsamen Räume (13, 14) in abwechselnder Folge und nacheinander mit einem Druckgas-Kreislauf und mit einer Vakuumpumpe in Verbindung steht.

4. Formgebungseinheit nach einem der vorstehenden Ansprüche, **dadurch gekennzeichnet, dass** jede Reihe (20, 21) rohrförmiger Kanäle der unteren Kammer (3) in kontinuierlichen und länglichen Gehäusen ausgehöhlt ist, die im Wesentlichen dieselbe Länge und dieselbe Breite haben wie der kontinuierliche und längliche Hohlraum (17, 18) der mittleren Kammer (2), mit dem sie (die Reihe) in Verbindung steht.

5. Formgebungseinheit nach einem der vorstehenden Ansprüche, **dadurch gekennzeichnet, dass** die oberen Öffnungen (22, 22') der rohrförmigen Kanäle (20, 21) der unteren Kammer (3) von einem Filter bedeckt sind.

6. Extrusionsvorrichtung zum Formen von Zellstrukturen auf Kunststoffbasis, mit:
- einem flächigen Düsenkopf, vorzugsweise mit einer vergrößerten Öffnung (6), die den geschmolzenen Kunststoff Schlitzen (7), die in der Vorderseite des Düsenkopfs angeordnet sind über Metallmesser (8), die Fließkanäle (9) definieren, die durch Metalllippen, die einen geraden Abschnitt (9a) aufweisen, verlängert sind, zuführt;
- zwei Formgebungseinheiten nach einem der Ansprüche 1 bis 5, die symmetrisch beiderseits der Schlitze (7) der Vorderseite des Düsenkopfs angeordnet sind.

7. Verfahren zur Herstellung von Zellstrukturen auf Kunststoffbasis unter Verwendung der Extrusionsvorrichtung nach Anspruch 6.

8. Verfahren nach Anspruch 7, **dadurch gekennzeichnet, dass** die hergestellten Zellstrukturen anisometrisch sind.

9. Verfahren nach Anspruch 8, **dadurch gekennzeichnet, dass** die am Auslass der Formgebungseinheiten gewonnenen Zellstrukturen nach vorheriger thermischer Konditionierung einem Schritt unterworfen werden, in welchem sie transversal gestreckt werden.

## Revendications

1. Conformateur comprenant trois compartiments, dénommés «supérieur», «médian» et «inférieur» et étagés, pour la fabrication d'une structure alvéolaire à base de matière plastique dans une filière à fentes parallèles, dans lequel:
- le compartiment supérieur (1) est traversé transversalement par au moins deux paires de conduits divergents (15, 16), débouchant sur la face inférieure dudit compartiment et situées de part et d'autre de l'axe longitudinal dudit compartiment, au moins une première paire de conduits divergents (15), située d'un côté dudit axe longitudinal, et au moins une seconde paire de conduits divergents (16), située de l'autre côté dudit axe longitudinal, chacune desdites paires de conduits divergents (15, 16) communiquant, en alternances successives et de manière séquentielle, avec des moyens pour injecter un gaz comprimé et avec des moyens pour créer une dépression;
- le compartiment médian (2) comprend des moyens communiquant avec au moins la première paire (15) et avec au moins la seconde paire (16) de conduits divergents du compartiment supérieur pour redistribuer le gaz comprimé et maintenir la dépression respectivement vers et depuis le compartiment inférieur (3);
- le compartiment inférieur (3) comprend, sur sa face supérieure, deux rangées (20, 21) de canaux tubulaires, aux orifices supérieurs (22, 22') régulièrement espacés, lesdits canaux traversant transversalement ledit compartiment et lesdites rangées étant disposées de part et d'autre de l'axe longitudinal dudit compartiment, chaque rangée de canaux tubulaires communiquant avec les moyens, les orifices inférieurs (23) des canaux de chaque rangée étant agencés de manière à se rejoindre et à être alignés sur la longueur de la face inférieure du compartiment inférieur et déboucher à proximité des espaces compris entre les fentes parallèles de la filière;
les moyens du compartiment médian étant constitués de deux cavités continues et allongées (17, 18) disposées de part et d'autre de l'axe longitudinal dudit compartiment, s'étendant sur substantiellement toute sa longueur et le traversant transversalement.

2. Conformateur selon la revendication 1, **caractérisé en ce que** le compartiment supérieur (1) est traversé transversalement par quatre paires de conduits divergents ((15, 15' et 16, 16').

3. Conformateur selon la revendication 1 ou 2, **caractérisé en ce que** les conduits divergents d'au moins la première paire (15) et les conduits divergents d'au moins la seconde paire (16) se rejoignent sur la face supérieure du compartiment supérieur (1) pour déboucher respectivement dans au moins une chambre commune (13) et dans au moins une chambre commune (14), chacune de ces chambres communes (13, 14) communiquant, en alternances successives et de manière séquentielle, avec un circuit de gaz comprimé et avec une pompe à vide.

4. Conformateur selon l'une quelconque des revendications précédentes, **caractérisé en ce que** chaque rangée (20, 21) de canaux tubulaires du compartiment inférieur (3) est creusée dans des logements continus et allongés ayant substantiellement la même longueur et la même largeur que la cavité continue et allongée (17, 18) du compartiment médian (2) avec laquelle elle communique.

5. Conformateur selon l'une quelconque des revendications précédentes, **caractérisé en ce que** les orifices supérieurs (22, 22') des canaux tubulaires (20, 21) du compartiment inférieur (3) sont revêtus d'un filtre.

6. Dispositif d'extrusion pour la mise en forme de structures alvéolaires à base de matière plastique comprenant
- une filière plate à ouverture élargie (6), qui amène la matière plastique fondue vers des fentes (7) pratiquées sur la face avant de la filière via des couteaux métalliques (8 )délimitant des canaux d'écoulement (9) prolongés par des lèvres métalliques ayant une partie rectiligne (9a);
- deux conformateurs selon l'une quelconque des revendications 1 à 5 disposés symétriquement de part et d'autre des fentes (7) de la face avant de la filière.

7. Procédé pour la fabrication de structures alvéolaires à base de matière plastique utilisant un dispositif d'extrusion selon la revendication 6.

8. Procédé selon la revendication 8, **caractérisé en ce que** les structures alvéolaires recueillies à la sortie des conformateurs sont soumises à une étape au cours de laquelle on les étire transversalement, après un conditionnement thermique préalable.

9. Procédé selon la revendication 7, en ce que les structures alvéolaires fabriquées sont anisométriques.
